# EUROPÄISCHE PATENTSCHRIFT

(11) **EP 3 237 862 B1**
(45) Veröffentlichungstag und Bekanntmachung des Hinweises auf die Patenterteilung: **19.06.2019**
(21) Anmeldenummer: 15808386.5
(22) Anmeldetag: 10.12.2015
(51) Int. Cl.: G01K 7/02, G01K 1/20, G01K 7/16

(54) **TEMPERATURFÜHLER**
TEMPERATURE PROBE
SONDE DE TEMPERATURE

(30) Priorität: 23.12.2014 DE 102014119593
(43) Veröffentlichungstag der Anmeldung: 01.11.2017
(73) Patentinhaber: Endress+Hauser Wetzer GmbH+Co. KG, 87484 Nesselwang (DE)
(72) Erfinder: UMKEHRER, Alfred, 87659 Hopferau (DE); VRDOLJAK, Pavo, 87484 Nesselwang (DE); BRÜNDL, Harald, 85247 Schwabhausen (DE); HÄRLE, Thomas, 87466 Oy-Mittelberg (DE)
(74) Vertreter: Andres, Angelika Maria
(86) Internationale Anmeldenummer: PCT/EP2015/079291
(87) Internationale Veröffentlichungsnummer: WO 2016/102195

(56) Entgegenhaltungen:
- EP-A1- 0 775 897
- DE-A1-102005 023 869
- DE-A1-102007 058 410
- DE-B4-102010 003 125

## Beschreibung

Die Erfindung bezieht sich auf einen Temperaturfühler, ein Thermometer, ein Verfahren zum Betreiben des Thermometers und auf die Verwendung von Temperaturfühler, Thermometer und Verfahren.

Aus dem Stand der Technik ist aus der Patentschrift DE 69733138 T2 ein selbstprüfender Temperatursensor bekannt geworden. Dort wird ein selbstprüfender Sensor mit einem ersten Thermopaar und einem zweiten Thermopaar bereitgestellt, dadurch gekennzeichnet dass ein temperaturabhängiges Element in der Form eines Impedanzelements, das ein erstes Ende und ein zweites Ende aufweist, wobei das erste Thermopaar mit dem ersten Ende gekoppelt ist und das zweite Thermopaar mit dem zweiten Ende gekoppelt ist, und ein Thermoelement, das mit dem temperaturabhängigen Element zwischen dem ersten und dem zweiten Ende gekoppelt Die Offenlegungsschrift DE 10 2010 003 125 A1 offenbart einen Platinwiderstand, der an eine Anschlussleitung angeschlossen ist. Die Anschlussleitung besteht aus einem anderen Material als Platin, sodass der Platinwiderstand und die Anschlussleitung ein Thermoelement bilden.

Thermometer in der Prozessautomation sollen die Temperatur eines Prozessmediums messen. In der Praxis ist das Sensorelement durch mehrere serielle thermische Widerstände (Schutzrohr, Kopplung Schutzrohr Messeinsatz, Mantel Messeinsatz, Pulver oder Verguss um den Sensor) vom Prozessmedium getrennt. Das Schutzrohr wird, basierend auf Erfahrungswerten, in seiner geometrischen Länge so gewählt, dass es zu einem kompletten thermischen Ausgleich zwischen dem Sensor und dem Prozessmedium kommt.

Ist das Thermometer zu kurz für einen kompletten thermischen Ausgleich (Anm.: die richtige Länge hängt von vielen Faktoren ab, wie z.B. Differenz Prozesstemperatur Umgebungstemperatur, Wärmeleitfähigkeit der Materialen des Thermometers, Kopplung Messeinsatz Schutzrohr, Wärmeleitfähigkeit Prozessmedium, Flussgeschwindigkeit Prozessmedium), existiert auf den letzten Zentimetern zur Sensorspitze ein relativ starker Temperaturgradient.

In der Literatur gibt es Methoden mit u.a. drei äquidistanten Temperatursensoren den wahren Prozesswert zu bestimmen (Klaus Irrgang, Lothar Michalowsky: Temperaturmesspraxis, ISBN-13: 978380272204). Diese sind in der Praxis sowohl aufwändig in der Sensorkonstruktion als auch hinsichtlich ihrer Signalauswertung. Dabei ist auch der Aufbau des Thermometers im Hinblick auf eine reproduzierbare Performance sehr anspruchsvoll.

Neben einem in der geometrischen Länge zu kurz ausgelegten Thermometer können in der Praxis auch bei Erstinstallation korrekt messende Thermometer im späteren Verlauf nicht mehr die korrekte Prozesstemperatur messen, wenn z.B. sich durch das Prozessmedium am Schutzrohr Ablagerungsschichten (Anbackungen) bilden oder der Messeinsatz eine schlechtere thermische Kopplung zum Schutzrohr aufweist.

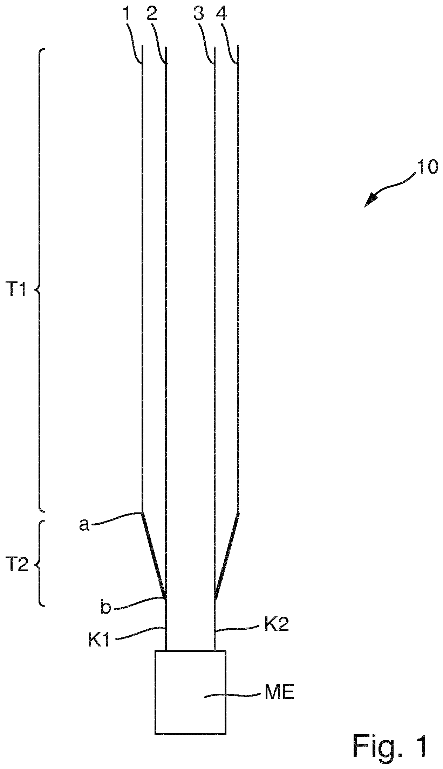

Folgende Erfindung ermöglicht eine einfache Realisierung (sowohl in der Sensorkonstruktion, als auch bei der Signalauswertung) einer entsprechenden Diagnose bei Widerstandsthermometern, ob es im Bereich der Sensorspitze zu einem thermischen Ausgleich kommt, oder ob ein "verdächtiger" Temperaturgradient existiert, der auf eines der oben erwähnten Messprobleme hinweist: Beim Widerstandssensor in 4-Leiterschaltung, wird an einem der vier Anschlussdrähte, die sich allesamt in kurzer Distanz zum Sensor befinden, ein Stück der Anschlussleitung durch ein anderes Material ersetzt (siehe Fig. 1), so dass zwischen den Anschlussleitungen 1 und 2 eine Thermospannung gemäß des Seebeck-Effekts gemessen werden kann, sobald entlang des "roten Drahtes" ein Temperaturgradient auftritt. Zwar müsste zur korrekten Messung der Differenz auch die Temperatur an der Stelle a bekannt sein, doch wenn eine Materialpaarung gewählt wird, deren EMF über die Temperatur relativ konstant ist, genügt es ersatzweise die Temperatur des Widerstandssensor ME zur näherungsweisen Bestimmung der Differenztemperatur zu verwenden. Kommt es im gesamten Bereich der Sensorspitze, in dem sich auch die Strecke a-b befindet, zu einem thermischen Ausgleich, so ist auch die Thermospannung Null und eine Auswertung des Thermoelementes ist nicht mehr notwendig.

Prinzipiell könnte natürlich auch der Draht ganz rechts in analoger Form ersetzt werden und idealerweise jedoch nur mit der halben Länge. So könnte sogar eine relativ präzise "Prädiktion" erfolgen wie hoch der Ableitfehler ist und die "wahre Prozesstemperatur" bestimmt werden.

Der Temperaturgradient (Wärmeableitfehler) entlang des Eintauchkörpers, in welchem ein Messelement angeordnet ist, wird über ein zusätzlich eingebautes Thermoelement bestimmen. Das Thermoelement ist dabei in eine oder mehrere der Anschlussleitungen des Messelements integriert.

Diese Erfindung ist bei bekannten Messelementen und Thermometern einsetzbar, da als Anschlussleitungen bereits Schenkel des sehr gut geeigneten Thermoelements vom Typ K verwendet werden. Die Messung der Differenztemperatur kann über einen zweiten Kanal eines Transmitters (Messumformer) erfolgen oder aber auch über ein einfaches Multimeter. Eine spezielle Funktion im der Gerätebeschreibung, bspw. Eines DTM, oder der Firmware des Thermometers kann dazu dienen, die Überwachung des Temperaturgradienten auszuführen und/oder um zu bestimmen, ob der Messwert der Temperaturdifferenz auf ein "Messproblem" deutet, u.a. unter Zuhilfenahme weiterer Werte wie eines Messwert des Messelements, bspw. eines RTDs, Informationen über das Schutzrohr, Umgebungstemperatur und Informationen über das Prozessmedium.

Auch historische Trendaufzeichnungen des Temperaturgradienten können Hinweise liefern auf eine qualitative Verschlechterung der Messung. Diese Diagnose könnte (evtl. zusammen mit weiteren schon vorhandenen Diagnosen) verwendet werden.

Gemäß der Erfindung werden ein Temperaturfühler nach dem Anspruch 1, ein Verfahren nach dem Anspruch 13 und eine Verwendung nach dem Anspruch 15 bereitgestellt. Weitere Ausführungsformen der Erfindung werden in den abhängigen Ansprüchen definiert.

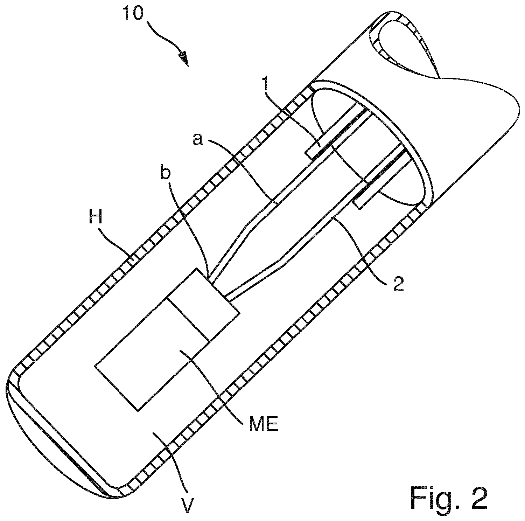

Die Erfindung wird anhand der nachfolgenden Zeichnungen näher erläutert. Es zeigt: Fig. 1: eine schematische Darstellung einer Ausführungsform eines Temperaturfühlers, Fig. 2: eine schematische Darstellung einer weiteren Ausführungsform eines Temperaturfühlers der in einer Hülse, wie bspw. einem Eintauchkörper, bspw. in Form eines Schutzrohrs angeordnet ist.

Figur 1 zeigt einen Temperaturfühler der in Vier-Leiter-Technik bzw. Vier-Punkt-Messung betrieben wird. Dabei ist eine erste, eine zweite, eine dritte und eine vierte Anschlussleitung vorgesehen. Diese Anschlussleitung erstrecken sich entlang einer Einbaustrecke bis zu einem Messelement ME. Die erste Anschlussleitung weist einen ersten Abschnitt T1 der sich entlang eines ersten Teil der Einbaustrecke erstreckt und einen zweiten Teil T2, der sich an einen daran anschließenden Teil der Einbaustrecke erstreckt. Der erste Abschnitt besteht aus einem ersten Material und der zweite Teil aus einem davon unterschiedlichen Material. Die Materialpaarung wird dabei so ausgewählt das sich ein thermoelektrischer Effekt, aufgrund der Temperaturdifferenz zwischen den Punkten a und b ergibt, falls eine solche Temperaturdifferenz zwischen den Punkten a und b überhaupt vorliegt. An dem Punkt a ist der erste Abschnitt der ersten Anschlussleitung mit dem zweiten Abschnitt verbunden. An dem Punkt b ist der zweite Abschnitt mit der zweiten Anschlussleitung und/oder dem Kontaktmittel des Messelements verbunden.

An ein weiteres Kontaktmittel des Messelements bei dem es sich bspw. um einen temperaturabhängigen Widerstand handelt sind eine dritte und eine vierte Anschlussleitung angeschlossen. Die Anschlussleitungen bilden verschieden Messkanäle, über die eine Thermospannung der ersten Anschlussleitung bspw. zwischen den Enden der ersten und der zweiten Anschlussleitung abgegriffen werden kann. Ferner kann ein weiterer Messkanal zwischen der zweiten und der dritten Anschlussleitung vorgesehen sein, der dazu dient ein Messsignal anhand des Messelements abzugreifen, das einer Temperatur entspricht.

Anhand der Anordnung der ersten Verbindungsstelle a und der zweiten Verbindungstelle b entlang unterschiedlicher Höhen der Einbaustrecke kann eine Temperaturdifferenz d.h. ein Temperaturgradient zwischen der Höhe, auf der der Punkt a liegt, und der Höhe, auf der der Punkt b liegt, ermittelt werden.

Figur 2 zeigt einen Temperaturfühler wie er bspw. in einem Messeinsatz verwendet wird. Ein solcher Messeinsatz wird entweder direkt in ein Prozessmedium getaucht oder in einem Schutzrohr angeordnet, welches den Messeinsatz vor dem Prozessmedium, dessen Temperatur bestimmt werden soll, schützt.

Der Messeinsatz weist eine, bspw. metallische, Hülse H auf, in der ein Füllmittel V, wie bspw. Verguss, bspw. aus einem keramischen Material, angeordnet ist, in welchem Füllmaterial V wiederum der Temperaturfühler, insbesondere das Messelement ME samt Anschlussleitungen 1, 2, eingebettet ist.

Das Messelement ist vorliegend über zwei Anschlussleitungen 1, 2 verbunden. Alternativ kann auch eine Anordnung mit drei oder vier Anschlussleitungen, wie in Figur 1 gezeigt, gewählt werden.

Die erste Anschlussleitung 1 gem. Figur 2 weist einen ersten Abschnitt auf der über eine Verbindungsstelle a mit einem zweiten Abschnitt verbunden ist. Dabei unterscheiden sich die Abschnitte hinsichtlich der Materialien aus denen sie bestehen. Über ein Verbindungstelle b ist der zweite Abschnitt mit dem Messelement verbunden. Eine zweite Anschlussleitung 2 ist ebenfalls mit dem Messelement ME verbunden. Die erste Anschlussleitung 1 ist dabei über das Messelement mit der zweiten Anschlussleitung 2 verbunden. Wie eingangs erwähnt, kann sich eine Thermospannung aufgrund der unterschiedlichen Materialpaarung an der Verbindungsstelle a und b ergeben. Diese Thermospannung kann zwischen den Anschlussleitungen 1, 2 abgegriffen werden und zur Ermittlung eines Wärmeableitfehlers verwendet werden.

Der Abschnitt zwischen den Verbindungstellen a, b ist dabei so gewählt, dass er sich im eingebauten Zustand in dem Lumen eines Behälters befindet, in dem sich auch ein Prozessmedium befindet. Dabei kann der Temperaturfühler samt hülse direkt dem prozessmedium ausgesetzt sein oder durch ein Schutzrohr davor geschätzt sein. Vorzugsweise ist als der Abschnitt zwischen den Verbindungsstellen wesentlich kürzer als der restliche Abschnitt der Verbindungsleitung, bspw. ist der Abschnitt zwischen a und b kleiner als die Hälfte, vorzugsweise kleiner als ein Drittel, oder als ein Fünftel oder als ein Sechstel oder ein Siebtel oder ein Achtel der Gesamtlänge T1, T2 der Anschlussleitung 1.

## Patentansprüche

1. Temperaturfühler (10) umfassend ein temperaturabhängiges Messelement (ME),
welches Messelement (ME) über wenigstens eine erste Anschlussleitung (1) und wenigstens eine zweite Anschlussleitung (2) kontaktierbar ist,
wobei die erste Anschlussleitung (1) einen ersten und einen zweiten Abschnitt (T1, T2) aufweist, wobei der zweite Abschnitt (T2) zwischen dem Messelement (ME) und dem ersten Abschnitt (T1) angeordnet ist,
wobei die erste und die zweite Anschlussleitung (1, 2) sich entlang einer Einbaustrecke bis zu dem Messelement (ME) erstrecken,
wobei der erste Abschnitt (T1) der ersten Anschlussleitung einen ersten Teil entlang dieser Einbaustrecke verläuft und wobei der zweite Abschnitt (T2) einen zweiten Teil entlang der Einbaustrecke verläuft und wobei sich der erste und der zweite Teil nicht überlappen, wobei der erste und der zweite Abschnitt (T1, T2) aus unterschiedlichen Materialien bestehen, und
wobei der erste und der zweite Abschnitt (T1, T2) der ersten Anschlussleitung (1) ein Thermoelement bilden.

2. Temperaturfühler (10) nach einem der vorherigen Ansprüche,
wobei die zweite Anschlussleitung (2) aus dem gleichen Material besteht wie der erste Abschnitt (T1) der ersten Anschlussleitung (1).

3. Temperaturfühler (10) nach einem der vorherigen Ansprüche,
wobei die erste Anschlussleitung (1) über das Messelement (ME) mit der der zweiten Anschlussleitung (2) verbunden ist, oder
wobei die zweite Anschlussleitung (2) direkt mit der ersten Anschlussleitung (1) verbunden ist.

4. Temperaturfühler (10) nach einem der vorherigen Ansprüche,
wobei das Messelement (ME) ein erstes Kontaktmittel (K1) und ein zweites Kontaktmittels-(K2), bspw. in Form eines Drahtes oder einer Lötstelle, aufweist,
wobei die erste und die zweite Anschlussleitung (1, 2) an das erste Kontaktmittel (K1) angeschlossen sind.

5. Temperaturfühler (10) nach Anspruch 4,
wobei eine dritte (3) und/oder vierte Anschlussleitung (4) an das zweite Kontaktmittel (K2) angeschlossen ist.

6. Temperaturfühler (10) nach Anspruch 5,
wobei die dritte Anschlussleitung (3) aus dem gleichen Material besteht wie der erste Abschnitt (T1) der ersten Anschlussleitung (1) und/oder aus dem gleichem Material wie die zweite Anschlussleitung (2), und/oder
wobei die vierte Anschlussleitung (4) aus dem gleichen Material besteht wie der erste Abschnitt (T1) der ersten Anschlussleitung (1) und/oder aus dem gleichem Material wie die zweite Anschlussleitung (2) und/oder aus dem gleichem Material wie die dritte Anschlussleitung (3).

7. Temperaturfühler (10) nach einem der vorherigen Ansprüche,
wobei es sich bei dem Messelement um einen temperaturanhängigen Widerstand, bspw. einen PT100, handelt.

8. Thermometer mit einem Temperaturfühler (10) nach einem der vorherigen Ansprüche, ferner umfassend einen Messumformer, der mit der ersten Anschlussleitung (1) und der zweiten Anschlussleitung (2), insbesondere einem proximalen Ende der ersten bzw. der zweiten Anschlussleitung, (elektrisch) verbunden ist, und
wobei der Messumformer dazu dient, eine Spannung, zwischen der ersten und der zweiten Anschlussleitung (1, 2), insbesondere dem proximalen Ende der ersten Anschlussleitung bzw. der zweiten Anschlussleitung zu erfassen.

9. Thermometer nach Anspruch 5 und 8,
wobei der Messumformer ferner mit der dritten und/oder der vierten Anschlussleitung (3, 4), vorzugsweise dem proximalen Ende der dritten bzw. vierten Anschlussleitung, verbunden ist, und
wobei der Messumformer ferner dazu dient, eine Spannung zwischen der dritten und der vierten Anschlussleitung (3, 4) zu erfassen.

10. Thermometer nach dem Anspruch 5 und einem der Ansprüche 8 oder 9, wobei der Messumformer ferner dazu dient, eine Spannung zwischen der zweiten und der dritten Anschlussleitung (2, 3) und/oder eine Spannung zwischen der zweiten und der vierten Anschlussleitung (2, 4) zu erfassen.

11. Thermometer nach einem der Ansprüche 8-10,
wobei ein Vergleichswert in dem Messumformer hinterlegt ist, um die zwischen der ersten und der zweiten Anschlussleitung (1, 2) vorliegende Spannung mit einem Vergleichswert zu verglichen, und in Abhängigkeit des Vergleichs eine Meldung zu erzeugen, die angibt, ob die Spannung zwischen der ersten und der zweiten Anschlussleitung (1, 2) den Vergleichswert überschritten hat, und
wobei die Meldung dazu dient, eine Wärmeableitung bzw. einen Wärmeableitfehler entlang des Verlaufs der Anschlussleitungen, oder der Einbaustrecke, des Messelements (ME) festzustellen.

12. Thermometer nach einem der Ansprüche 8-11,
wobei der Messumformer dazu dient, einen Messwert aus dem Messsignal des Messelements (ME) zu bestimmen, und/oder
den Messwert in Abhängigkeit der zwischen der ersten und zweiten Anschlussleitung (1, 2) vorliegenden Spannung zu korrigieren.

13. Verfahren zur Überwachung eines Temperaturfühlers (10) nach einem der Ansprüche 1-7, insbesondere eines Thermometers mit einem Temperaturfühler nach einem der Ansprüche 1-7, wobei eine Spannung zwischen der ersten und der zweiten Anschlussleitung (1, 2) erfasst wird.

14. Verfahren nach Anspruch 13,
wobei die zwischen der ersten und der zweiten Anschlussleitung (1, 2) erfasste Spannung mit einem Vergleichswert, bspw. einer Vergleichsspannung, verglichen wird.

15. Verwendung des Temperaturfühlers (10) nach einem der Ansprüche 1-7, des Thermometers nach einem der Ansprüche 8-12 bzw. des Verfahrens nach einem der Ansprüche 13 oder 14 zur Ermittlung einer Wärmeableitung bzw. eines Wärmeableitfehlers.

## Claims

1. Temperature sensor (10) comprising a temperature-dependent measuring element (ME), wherein it is possible to connect said measuring element (ME) via a first connecting cable (1) and at least a second connecting cable (2),
wherein the first connecting cable (1) has a first and a second section (T1, T2), the second section (T2) being arranged between the measuring element (ME) and the first section (T1);
wherein the first and the second connecting cable (1, 2) extend along an installation segment as far as the measuring element (ME),
wherein the first section (T1) of the first connecting cable (1) extends with a first part along the installation segment and the second section (T2) extends with a second part along the installation segment, and wherein the first and the second part do not overlap,
wherein the first and the second section (T1, T2) are made from different materials, and
wherein the first and the second section (T1, T2) of the first connecting cable (1) form a thermocouple.

2. Temperature sensor (10) as claimed in one of the previous claims,
wherein the second connecting cable (2) is made from the same material as the first section (T1) of the first connecting cable (1).

3. Temperature sensor (10) as claimed in one of the previous claims,
wherein the first connecting cable (1) is connected to the second connecting cable (2) via the measuring element (ME), or
wherein the second connecting cable (2) is directly connected to the first connecting cable (1).

4. Temperature sensor (10) as claimed in one of the previous claims,
wherein the measuring element (ME) has a first means of contact (K1) and a second means of contact (K2), for example in the form of a wire or a solder joint, wherein the first and the second connecting cable (1, 2) are connected to the first means of contact (K1).

5. Temperature sensor (10) as claimed in Claim 4,
wherein a third (3) and/or a fourth connecting cable (4) is connected to the second means of contact (K2).

6. Temperature sensor (10) as claimed in Claim 5,
wherein the third connecting cable (3) is made from the same material as the first section (T1) of the first connecting cable (1) and/or of the same material as the second connecting cable (2), and/or
wherein the fourth connecting cable (4) is made from the same material as the first section (T1) of the first connecting cable (1) and/or from the same material as the second connecting cable (2) and/or from the same material as the third connecting cable (3).

7. Temperature sensor (10) as claimed in one of the previous claims,
wherein the measuring element is a temperature-dependent resistor, such as a PT100.

8. Thermometer with a temperature sensor (10) as claimed in one of the previous claims, further comprising a transmitter which is connected (electrically) to the first connecting cable (1) and the second connecting cable (2), particularly a proximal end of the first connecting cable or of the second connecting cable, and
wherein the transmitter is used to measure a voltage between the first and the second connecting cable (1, 2), particularly the proximal end of the first connecting cable or of the second connecting cable.

9. Thermometer as claimed in Claim 5 and 8,
wherein the transmitter is further connected to the third and/or the fourth connecting cable (3, 4), preferably the proximal end of the third or fourth connecting cable, and
wherein the transmitter is further used to measure a voltage between the third and the fourth connecting cable (3, 4).

10. Thermometer as claimed in Claim 5 and one of the Claims 8 or 9,
wherein the transmitter is further used to measure a voltage between the second and the third connecting cable (2, 3) and/or a voltage between the second and the fourth connecting cable (2, 4).

11. Thermometer as claimed in one of the Claims 8 to 10,
wherein a reference value is saved in the transmitter for the purpose of comparing the voltage present between the first and the second connecting cable (1, 2) with a reference value and, depending on the result of the comparison, to generate a message that indicates whether the voltage between the first and the second connecting cable (1, 2) has exceeded the reference value, and
wherein the message is used to determine heat dissipation and/or a heat dissipation error along the course of the connecting cables, or the installation segment, of the measuring element (ME).

12. Thermometer as claimed in one of the Claims 8 to 11,
wherein the transmitter is used to determine a measured value from the measuring signal of the measuring element (ME), and/or
to correct the measured value depending on the voltage present between the first and the second connecting cable (1, 2).

13. Procedure to monitor a temperature sensor (10) as claimed in one of the Claims 1 to 7, particularly a thermometer with a temperature sensor as claimed in one of the Claims 1 to 7,
wherein a voltage is measured between the first and the second connecting cable (1, 2).

14. Procedure as claimed in Claim 13,
wherein the voltage measured between the first and the second connecting cable (1, 2) is compared with a reference value, for example a reference voltage.

15. Use of the temperature sensor (10) as claimed in one of the Claims 1 to 7, of the thermometer as claimed in one of the Claims 8 to 12, or of the procedure as claimed in one of the Claims 13 or 14, to determine heat dissipation and/or a heat dissipation error.

## Revendications

1. Sonde de température (10) comprenant un élément de mesure (ME) dépendant de la température, lequel élément de mesure (ME) peut être mis en contact via un premier câble de raccordement (1) et au moins un deuxième câble de raccordement (2),
le premier câble de raccordement (1) présentant une première et une deuxième section (T1, T2), la deuxième section (T2) étant disposée entre l'élément de mesure (ME) et la première section (T1) ;
le premier et le deuxième câble de raccordement (1, 2) s'étendant le long d'un tronçon intermédiaire jusqu'à l'élément de mesure (ME),
la première section (T1) du premier câble de raccordement (1) s'étendant avec une première partie le long de ce tronçon intermédiaire et la deuxième section (T2) s'étendant avec une deuxième partie le long du tronçon intermédiaire, et la première et la deuxième partie ne se chevauchant pas,
la première et la deuxième section (T1, T2) étant constituées de matériaux différents, et
la première et la deuxième section (T1, T2) du premier câble de raccordement (1) formant un thermocouple.

2. Sonde de température (10) selon l'une des revendications précédentes,
pour lequel le deuxième câble de raccordement (2) est constitué du même matériau que celui de la première section (T1) du premier câble de raccordement (1).

3. Sonde de température (10) selon l'une des revendications précédentes,
pour lequel le premier câble de raccordement (1) est relié via l'élément de mesure (ME) avec le deuxième câble de raccordement (2), ou
pour lequel le deuxième câble de raccordement (2) est relié directement avec le premier câble de raccordement (1).

4. Sonde de température (10) selon l'une des revendications précédentes,
pour lequel l'élément de mesure (ME) présente un premier moyen de contact (K1) et un deuxième moyen de contact (K2), par exemple sous la forme d'un fil ou d'une soudure,
le premier et le deuxième câble de raccordement (1, 2) étant raccordés au premier moyen de contact (K1).

5. Sonde de température (10) selon la revendication 4,
pour lequel un troisième (3) et/ou un quatrième câble de raccordement (4) est raccordé au deuxième moyen de contact (K2).

6. Sonde de température (10) selon la revendication 5,
pour lequel le troisième câble de raccordement (3) est constitué du même matériau que celui de la première section (T1) du premier câble de raccordement (1) et/ou du même matériau que celui du deuxième câble de raccordement (2), et/ou
le quatrième câble de raccordement (4) étant constitué du même matériau que celui de la première section (T1) du premier câble de raccordement (1) et/ou du même matériau que celui du deuxième câble de raccordement (2) et/ou du même matériau que celui du troisième câble de raccordement (3).

7. Sonde de température (10) selon l'une des revendications précédentes,
pour lequel il s'agit, concernant l'élément de mesure, d'une résistance dépendant de la température, par exemple une sonde PT100.

8. Capteur de température avec une sonde de température (10) selon l'une des revendications précédentes, comprenant en outre un transmetteur, qui est relié (électriquement) avec le premier câble de raccordement (1) et le deuxième câble de raccordement (2), notamment une extrémité proximale du premier câble de raccordement ou du deuxième câble de raccordement, et
pour lequel le transmetteur sert à mesurer une tension entre le premier et le deuxième câble de raccordement (1, 2), notamment l'extrémité proximale du premier câble de raccordement ou du deuxième câble de raccordement.

9. Capteur de température selon les revendications 5 et 8,
pour lequel le transmetteur est en outre relié avec le troisième et/ou le quatrième câble de raccordement (3, 4), de préférence l'extrémité proximale du troisième ou du quatrième câble de raccordement, et
pour lequel le transmetteur sert en outre à mesurer une tension entre le troisième et le quatrième câble de raccordement (3, 4).

10. Capteur de température selon la revendication 5 et l'une des revendications 8 ou 9,
pour lequel le transmetteur sert en outre à mesurer une tension entre le deuxième et le troisième câble de raccordement (2, 3) et/ou une tension entre le deuxième et le quatrième câble de raccordement (2, 4).

11. Capteur de température selon l'une des revendications 8 à 10,
pour lequel une valeur de référence est enregistrée dans le transmetteur, afin de comparer la tension présente entre le premier et le deuxième câble de raccordement (1, 2) avec une valeur de référence et, en fonction de la comparaison, à générer un message indiquant si la tension entre le premier et le deuxième câble de raccordement (1, 2) a dépassé la valeur de référence, et
le message servant à constater une dissipation de chaleur ou un défaut de dissipation de chaleur le long des câbles de raccordement, ou du tronçon intermédiaire de l'élément de mesure (ME).

12. Capteur de température selon l'une des revendications 8 à 11,
pour lequel le transmetteur sert à déterminer une valeur mesurée à partir du signal de mesure de l'élément de mesure (ME), et/ou
à corriger la valeur mesurée en fonction de la tension présente entre le premier et le deuxième câble de raccordement (1, 2).

13. Procédé destiné à la surveillance d'une sonde de température (10) selon l'une des revendications 1 à 7, notamment d'un capteur de température avec une sonde de température selon l'une des revendications 1 à 7,
une tension étant mesurée entre le premier et le deuxième câble de raccordement (1, 2).

14. Procédé selon la revendication 13,
pour lequel la tension mesurée entre le premier et le deuxième câble de raccordement (1, 2) est comparée avec une valeur de référence, par exemple une tension de référence.

15. Utilisation de la sonde de température (10) selon l'une des revendications 1 à 7 du capteur de température selon l'une des revendications 8 à 12 ou du procédé selon l'une des revendications 13 ou 14, en vue de la détermination d'une dissipation de chaleur ou d'un défaut de dissipation de chaleur.
